Europäisches Patentamt

(19) European Patent Office

Office européen des brevets

(11) Publication number: **0 173 865**
**B1**

(12) **EUROPEAN PATENT SPECIFICATION**

(45) Date of publication of patent specification: **02.11.88**

(21) Application number: **85109727.9**

(22) Date of filing: **02.08.85**

(51) Int. Cl.⁴: **F 16 G 13/07**

(54) **Detachable link chain.**

(30) Priority: **09.08.84 US 639308**

(43) Date of publication of application:
**12.03.86 Bulletin 86/11**

(45) Publication of the grant of the patent:
**02.11.88 Bulletin 88/44**

(84) Designated Contracting States:
**DE FR GB IT**

(56) References cited:
**DE-A- 51 232**
**DE-A- 54 663**
**FR-A- 948 166**
**GB-A- 211 957**
**GB-A- 866 641**
**US-A-2 766 635**
**US-A-3 069 923**
**US-A-4 473 365**

(73) Proprietor: **The Laitram Corporation**
**220 Laitram Lane**
**Harahan Louisiana 70123 (US)**

(72) Inventor: **Lapeyre, James M.**
**13 Richmond Place**
**New Orleans Louisiana 70150 (US)**

(74) Representative: **Kraus, Walter, Dr. et al**
**Patentanwälte Kraus, Weisert & Partner**
**Thomas-Wimmer-Ring 15**
**D-8000 München 22 (DE)**

Courier Press, Leamington Spa, England.

## Description

The present invention relates to a multiple link chain composed of a plurality of identical links, each comprising:

a central portion having a longitudinal axis, a first post end and a second hook end spaced along the axis, first and second longitudinally extending link sides, and first and second link upper and lower sides;

said first and second link sides each being a planar surface integrally formed with the central portion in such a way that the central portion defines a general trapezoidally shaped cross-section with said first and second planar link sides being cooperative to define a body configuration adapted for mating with a V-pulley;

the first post end having an integral longitudinally extending arm having an axis coincident with the long axis of the central portion, and a post centrally disposed on and integral with the free end of the arm with its axis transverse to the long axis of the arm, and having first and second opposing ends outwardly extending from the arm and defining a first pivot axis orthogonal to the longitudinal axis of the central portion;

the second hook end having first and second spaced apart and laterally inwardly extending arcuate walls defining first and second elongated post end receiving slots, said walls integral with side portions and integral with said central portion, defining therebetween a transversely extending gap, and defining a second pivot axis orthogonal to the longitudinal axis, said first and second arcuate walls are pivotally attachable to the central, transversely extending post of an adjacent link for pivotal movement of the attached link about the pivot axis with said first opposing end received in said first post end receiving slot, and with said second opposing end received in said second post end receiving slot, the confronting ends of said inwardly extending walls defining an open free space therebetween, so that the arm of an adjacent link can be inserted from the upper link side through said open free space; and

the links when pivotally engaged having the first pivot axis of one link substantially coincident with the second pivot axis of the adjacent link.

A multiple link chain of this type is known from GB—A—866 641. In this link chain the inner distance between the spaced apart side walls of the side portions is generally smaller than the axial length of the posts, so that a post of an adjacent link can only be inserted in position for pivotal movement in circular blind holes by flexing the side walls apart from each other. This makes the interconnection of the links difficult and requires relative weak links insofar as their sidewalls must be flexible to a relatively high extent. Another multiple link chain described in DE—C—54 663 has a web extending between the side walls such that the arm of the post cannot be inserted from the upper side however must be inserted through a wide opening in the bottom side of the links. Since this opening for insertion must be wide enough to receive the arm and the post significant material of the link must be removed, having relatively weak link body walls. Furthermore, the insertion through such an opening is time-consuming and complicated.

It is the object of the present invention to provide a multiple link chain of the type mentioned in the beginning, the links of which can be interconnected easily and which can be made strong.

This object is achieved by a multiple link chain which is characterized in that the inner distance between the spaced apart walls of the side portions is larger than the axial length of said posts, so that a post of an adjacent link can be inserted in position for pivotal movement between said spaced apart walls of the side portions without flexing of said walls.

Thus, the links are thereby able to readily interfit by sliding the post of one link from the upper side of an adjacent link into the hook end thereof and without the necessity of making the links relatively weak.

The link chain can be used as a transmission chain or as a conveyor chain. As a conveyor, the link can be composed of a plurality of link portions, each of a type substantially as described above, such that the conveyor link has an array of post ends and an array of hook ends which are mateable with like conveyor links. The conveyor links can be fabricated in multiples of a given width so that conveyors can be built up of any intended overall width.

The invention will be more fully understood from the following detailed description taken in conjunction with the accompanying drawings, in which:

Figure 1 is a pictorial view of a link according to the present invention;

Figure 2 is a side elevation view of the link of Figure 1;

Figure 3 is a sectional view along line 2—2 of Figure 1;

Figure 4 is an end elevation view of the hook end of the link of Figure 1; and

Figure 5 is an end elevation view of the post end of the link of Figure 1.

The link chain embodiment of the invention is composed of interconnected links, each of which is of identical construction and which preferably are of integral molded plastic construction.

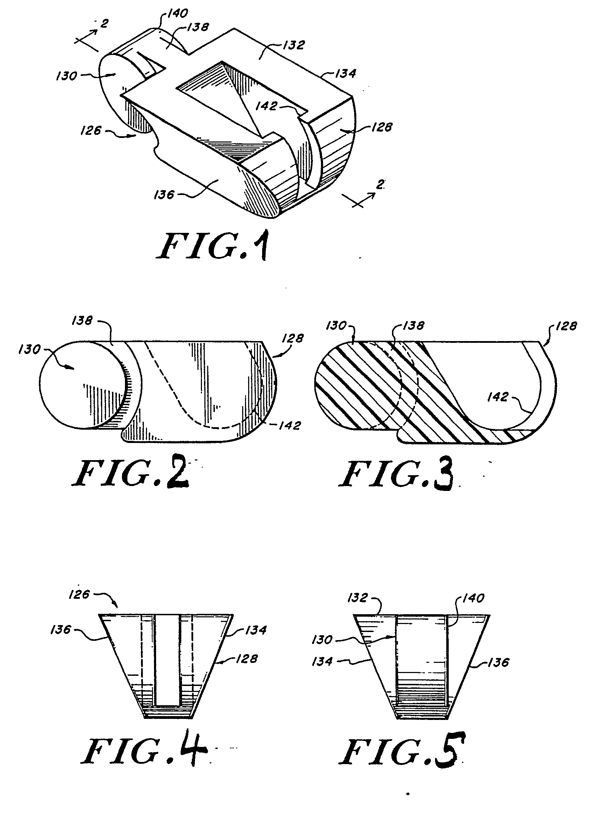

An embodiment is shown in Figures 1 to 5 of a link of a link chain specially suited for use with a V-pulley. Referring to Figures 1 to 5, the link 126 includes a hook end 128 and a post end 130. A central portion 132 extends across the width of the link and joining side portions 134 and 136. Each post end 130 includes an arm 138 and a post having opposing ends 140 integrally formed therewith and transversely extending across the link 126. The hook ends 128 each have arcuate walls 142. As best seen in Figures 4 and 5 the outer surfaces of the side portions 134, 136 are each planar and so oriented as to define a link cross-section that is generally trapezoidal. It will be appreciated that the non-parallel sides of the trapezoidal cross-section defined by the side portions 134, 136 define a body configuration adapted for mating with a V-pulley, not shown. A link chain composed of a plurality of identical links 126 is driven by friction on the sides of the "V" surfaces of the links, preferably employing neither teeth nor recesses.

The links of the embodiment described above are each preferably formed as a unitary structure by plastic molding. Any suitable plastic material can be employed which provides the requisite structural and environmental properties for the intended purpose.

The invention is not to be limited to what has been particularly shown and described except as indicated in the appended claims.

### Claim

A multiple link chain composed of a plurality of identical links (126), each comprising:

a central portion (132) having a longitudinal axis, a first post end 130 and a second hook end (128) spaced along the axis, first and second longitudinally extending link sides, and first and second link upper and lower sides;

said first and second link sides each being a planar surface integrally formed with the central portion (132) in such a way that the central portion (132) defines a general trapezoidally shaped cross-section with said first and second planar link sides being cooperative to define a body configuration adapted for mating with a V-pulley;

the first post end (130) having an integrally longitudinally extending arm (138) having an axis coincident with the long axis of the central portion (132), and a post centrally disposed on and integral with the free end of the arm (138) with its axis transverse to the long axis of the arm (138), and having first and second opposing ends (140) outwardly extending from the arm (138) and defining a first pivot axis orthogonal to the longitudinal axis of the central portion (132);

the second hook end (128) having first and second spaced apart and laterally inwardly extending arcuate walls (142) defining first and second elongated post end receiving slots, said walls (142) integral with side portions (134, 136) and integral with said central portion (132) defining therebetween a transversely extending gap, and defining a second pivot axis orthogonal to the longitudinal axis, said first and second arcuate walls (142) are pivotally attachable to the central, transversely extending post of an adjacent link (126) for pivotal movement of the attached link (126) about the pivot axis with said first opposing end (140) received in said first post end receiving slot, and with said second opposing end (140) received in said second post end receiving slot, the confronting ends of said inwardly extending walls (142) defining an open free space therebetween, so that the arm (138) of an adjacent link (126) can be inserted from the upper link side through said open free space; and

the links (126) when pivotally engaged having the first pivot axis of one link (126) substantially coincident with the second pivot axis of the adjacent link (126);

characterized in that the inner distance between the spaced apart walls of the side portions (134, 136) is larger than the axial length of said posts, so that a post of an adjacent link (126) can be inserted in position for pivotal movement between said spaced apart walls of the side portions (134, 136) without flexing of said walls.

### Patentanspruch

Mehrgliedrige Kette, zusammengesetzt aus einer Mehrzahl von identischen Gliedern (126), von denen jedes folgendes umfaßt:

einen mittigen Teil (132), der eine Längsachse hat, ein erstes, Stabende (130) und ein zweites, Hakenende (128), die längs der Achse im Abstand angeordnet sind, eine erste und zweite, sich in Längsrichtung erstreckende Gliedseite, und eine erste und zweite Gliedober- und -unterseite;

wobei die erste und zweite Gliedseite je eine planare Oberfläche ist, die integral mit dem mittigen Teil (132) in einer solchen Weise ausgebildet ist, daß der mittige Teil (132) einen generell trapezförmigen Querschnitt definiert, wobei die erste und zweite planare Gliedseite dahingehend zusammenwirken, daß sie eine Körperkonfiguration definieren, die zum Ineingriffstehen mit einer V-Rolle geeignet ist;

wobei das erste, Stabende (130) einen integralen, sich in Längsrichtung erstreckenden Arm (138) hat, der eine Achse hat, die mit der Längsachse des mittigen Teils (132) zusammenfällt, und einen Stab, der mittig auf dem freien Ende des Arms (138) angeordnet und mit diesem integral ist, wobei seine Achse quer zu der Längsachse des Arms (138) ist, und wobei er ein erstes und zweites gegenüberliegendes Ende (140) hat, die sich nach auswärts von dem Arm (138) erstrecken und eine erste Drehachse definieren, die rechtwinklig zu der Längsachse des mittigen Teils (132) ist;

wobei das zweite, Hakenende (128) eine erste und zweite, im Abstand voneinander befindliche und sich seitlich nach einwärts erstreckende bogenförmige Wand (142) hat, die einen ersten und zweiten langgestreckten Stabendeaufnahmeschlitz dazwischen definieren, wobei diese Wände (142) integral mit Seitenteilen (134, 136) und integral mit dem mittigen Teil (132) dazwischen einen sich quer erstreckenden Spalt begrenzen, und eine zweite Drehachse definieren, die rechtwinklig zu der Längsachse ist, wobei die erste und zweite bogenförmige Wand (142) drehbar an dem mittigen, sich quer erstreckenden Stab eines benachbarten Glieds (120) anbringbar sind, und zwar zu einer Drehbewegung des angebrachten Glieds (126) um die Drehachse des ersten gegenüberliegenden Endes (140), das in dem ersten Stabendeaufnahmeschlitz aufgenommen ist, und wobei das zweite entgegengesetzte Ende (140) in dem zweiten Stabendeaufnahmeschlitz aufgenommen ist, wobei die gegenüberliegenden Enden der sich nach einwärts erstreckenden Wände (142) einen offenen freien Raum dazwischen begrenzen, so daß der Arm (138) eines benachbarten Glieds (126) von der oberen Gliedseite durch den offenen freien Raum eingefügt werden kann; und

wobei von den Gliedern (126), wenn diese drehbar im Eingriff sind, die erste Drehachse von einem Glied (126) im wesentlichen mit der zweiten Drehachse des benachbarten Glieds (126) zusammenfällt;

dadurch gekennzeichnet, daß der innere Abstand zwischen den im Abstand voneinander befindlichen Wänden der Seitenteile (134, 136) größer als die axiale Länge der Stäbe ist, so daß ein Stab eines benachbarten Glieds (126) in Position für eine Drehbewegung zwischen die im Abstand voneinander befindlichen Wände der Seitenteile (134, 136) ohne Biegen dieser Wände eingeführt werden kann.

## Revendication

Chaîne à maillons multiples, constituée d'une pluralité de maillons identiques (126), chacun comprenant:

une portion centrale (132) présentant un axe longitudinal, une première extrémité (130) en forme de colonne et une seconde extrémité (128) en forme de crochet, espacées l'une de l'autre selon l'axe, une première et une seconde faces de maillon s'étendant longitudinalement, et une première et une seconde faces supérieure et inférieure de maillon;

ladite première et ladite seconde faces de maillons étant chacune une surface plane formée, d'une seule pièce, avec la portion centrale (132) de façon que la portion centrale (132) définisse une section droite de forme générale trapézoïdale, ladite première face et ladite seconde faces planes du maillon collaborant pour définir une configuration de corps adaptée à correspondre avec une poulie en V;

la première extrémité (130), en forme de colonne, présentant un bras (138) solidaire, s'étendant longitudinalement et dont l'axe coincide avec l'axe longitudinal de la portion centrale (132), ainsi qu'une colonne disposée, dans l'axe, sur l'extrémité libre du bras (138), et solidaire de cette extrémité, cette colonne ayant son axe transversal à l'axe longitudinal du bras (138) et présentant une première et une seconde extrémités (140), opposées l'une à l'autre, s'étendant vers l'extérieur depuis le bras (138) et définissant un premier axe de pivotement orthogonal à l'axe longitudinal de la portion central (132);

la seconde extrémité (128), en forme de crochet, présentant une première et une seconde parois en arc (142) espécées l'une de l'autre, s'étendant latéralement vers l'intérieur et définissant une première et une seconde encoches, de forme allongée, de réception de l'extrémité en forme de colonne, lesdites parois (142), solidaires des portions latérales (134, 136) et solidaires de ladite portion centrale (132), définissant entre elles un vide qui s'étend transversalement et définissant un second axe de pivotement orthogonal à l'axe longitudinal; ladite première et ladite seconde parois en arc (142) peuvent être attachées, avec possibilité de pivotement, à la colonne centrale, s'étendant transversalement, d'un maillon adjacent (126) pour permettre un mouvement de pivotement du maillon attaché (126) autour de l'axe de pivotement, ladite première extrémité opposée (140) se logeant dans ladite première encoche de réception de l'extrémité en forme de colonne, et ladite second extrémité opposée (140) se logeant dans ladite second encoche de réception de l'extrémité en forme de colonne, les extrémités se faisant face desdites parois (142) qui s'étendent vers l'intérieur définissant entre elles un espace libre ouvert de façon que le bras (138) d'un maillon adjacent (126) puisse être introduit, depuis la face supérieure du maillon, dans ledit espace libre ouvert; et

les maillons (126), lorsqu'ils sont en prise avec possibilité de pivotement, présentant le premier axe de pivotement de l'un des maillons (126) sensiblement en coincidence avec le second axe de pivotement du maillon adjacent (126);

caractérisée en ce que la distance intérieure entre les parois (134, 136), espacées l'une de l'autre, des portions latérales est supérieure à la longueur axiale desdites colonnes, de sorte que l'on peut introduire en position une colonne d'un maillon adjacent (126) pour permettre son mouvement de pivotement entre lesdites parois (134, 136), espacées l'une de l'autre, des portions latérales, sans avoir à fléchir lesdites parois.

FIG.1

FIG.2     FIG.3

FIG.4     FIG.5